# EUROPEAN PATENT APPLICATION

(11) **EP 4 020 300 A1**
(43) Date of publication of application: **29.06.2022**
(21) Application number: 21213763.2
(22) Date of filing: 10.12.2021
(51) Int. Cl.: G06F 30/10, A43D 3/02, A43D 119/00, G06Q 50/04, G06F 111/16

(54) **SHOE FORM MANUFACTURING ASSISTANCE APPARATUS AND SHOE FORM MANUFACTURING SYSTEM**

(30) Priority: 24.12.2020 JP 2020215087; 14.09.2021 JP 2021149284
(71) Applicant: ASICS Corporation, Kobe-shi Hyogo 650-8555 (JP)
(72) Inventor: KOZUKA, Yuya, Hyogo, 650-8555 (JP); HATANO, Genki, Hyogo, 650-8555 (JP); TAKASHIMA, Shingo, Hyogo, 650-8555 (JP)
(74) Representative: Hargreaves, Timothy Edward

(57) **Abstract**

A shoe form manufacturing assistance apparatus (100) includes: a receiving unit (131) that receives information about a shoe of a user; a calculation unit (132) that selects, based on the information received by the receiving unit (131), at least one type of a shoe form model from a plurality of types of shoe form models that are different from each other in terms of manufacturing method, and calculates manufacture data for a shoe form in accordance with the at least one type of the shoe form model that is selected; and an output unit (108) that outputs the manufacture data calculated by the calculation unit (132).

## Description

This nonprovisional application is based on Japanese Patent Application No. 2020-215087 filed on December 24, 2020 and No. 2021-149284 filed on September 14, 2021 with the Japan Patent Office, the entire contents of which are hereby incorporated by reference.

### BACKGROUND OF THE INVENTION

### Field of the Invention

The present disclosure relates to a shoe form manufacturing assistance apparatus and a shoe form manufacturing system.

### Description of the Background Art

For manufacturing a custom-made shoe tailored to each foot of a user, the foot form of the user is measured with a measuring apparatus to generate shoe form data based on data about the measured foot form. Based on the generate shoe form data, a shoe form (last) is manufactured for manufacturing a shoe (see for example Japanese Patent No. 6685303).

### SUMMARY OF THE INVENTION

Conventionally, a shoe form for manufacturing a custom-made shoe is required to be manufactured with a carving machine or a three-dimensional printer (referred to hereinafter as "3D printer"). Recently, however, shoe forms manufactured by a variety of manufacturing methods have been developed. In the present disclosure, shoe forms that are different from each other in terms of manufacturing method are each given a model name. For example, a shoe form manufactured with a carving machine is referred to herein as "carving model" and a shoe form manufactured with a 3D printer is referred to herein as "3D printer model." These models that are different from each other in terms of manufacturing method are collectively referred to herein as "shoe form model."

If a plurality of shoe form models that are different from each other in terms of manufacturing method are provided, the optimum shoe form model is required to be selected in consideration of the precision, the cost, and the time taken for manufacturing, for example, of the shoe to be manufactured. In order to select the optimum shoe form model that satisfies a required condition(s) from a plurality of shoe form models that are different from each other in terms of manufacturing method, experience and/or knowhow is necessary, which is burdensome for an operator who is to manufacture the shoe form.

An object of the present disclosure is to provide a shoe form manufacturing assistance apparatus that assists selection of the optimum shoe form model that satisfies a required condition(s), from a plurality of shoe form models, and to provide a shoe form manufacturing system including the shoe form manufacturing assistance apparatus.

A shoe form manufacturing assistance apparatus according to an aspect of the present disclosure includes: a receiving unit that receives information about a shoe of a user; a calculation unit that selects, based on the information received by the receiving unit, at least one type of a shoe form model from a plurality of types of shoe form models that are different from each other in terms of manufacturing method, and calculates manufacture data for a shoe form in accordance with the at least one type of the shoe form model that is selected; and an output unit that outputs the manufacture data calculated by the calculation unit.

A shoe form manufacturing system includes: a shoe form manufacturing assistance apparatus that calculates manufacture data for a shoe form; and a shoe form manufacturing apparatus that manufactures a shoe form using the manufacture data calculated by the shoe form manufacturing assistance apparatus. The shoe form manufacturing assistance apparatus includes: a receiving unit that receives information about a shoe of a user; a calculation unit that selects, based on the information received by the receiving unit, at least one type of a shoe form model from a plurality of types of shoe form models that are different from each other in terms of manufacturing method, and calculates the manufacture data for a shoe form in accordance with the at least one type of the shoe form model that is selected; and a transmission unit that transmits the manufacture data calculated by the calculation unit. The shoe form manufacturing apparatus includes: a receiving unit that receives the manufacture data from the shoe form manufacturing assistance apparatus; and a manufacturing unit that manufactures the shoe form using the manufacture data received by the receiving unit.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 illustrates an overview of a shoe form manufacturing assistance apparatus according to Embodiment 1.
Fig. 2 is a schematic diagram showing an example hardware configuration of the shoe form manufacturing assistance apparatus according to Embodiment 1.
Fig. 3 shows an example functional configuration of the shoe form manufacturing assistance apparatus according to Embodiment 1.
Fig. 4 shows an example of shoe form models.
Fig. 5 shows an example of characteristics of each shoe form model.
Fig. 6 shows an example of a recommended shoe form model database according to Embodiment 1.
Fig. 7 shows an example of manufacture data that is output from the shoe form manufacturing assistance apparatus according to Embodiment 1.
Fig. 8 is a flowchart showing an example of a process performed by the shoe form manufacturing assistance apparatus according to Embodiment 1.
Fig. 9 is a schematic diagram showing an example configuration of a shoe form manufacturing system according to Embodiment 2.
Fig. 10 is a schematic diagram showing an example hardware configuration of a shoe form manufacturing apparatus according to Embodiment 2.
Fig. 11 is a flowchart showing an example of a process performed by the shoe form manufacturing system according to Embodiment 2.

### DESCRIPTION OF THE PREFERRED EMBODIMENTS

Each embodiment is described hereinafter with reference to the drawings. In the following description, the same parts are denoted by the same reference characters. They are named and function identically. Therefore, a detailed description thereof is not herein repeated.

### [Embodiment 1]

In connection with Embodiment 1, an example of the scene to which the present invention is applied is described. In connection with Embodiment 1, a shoe form manufacturing apparatus is described that measures the foot form of a user in a shop for example, selects at least one type of a shoe form model from a plurality of types of shoe form models that are different from each other in terms of manufacturing method, based on the measured foot form of the user, and outputs manufacture data for a shoe form in accordance with the selected shoe form model.

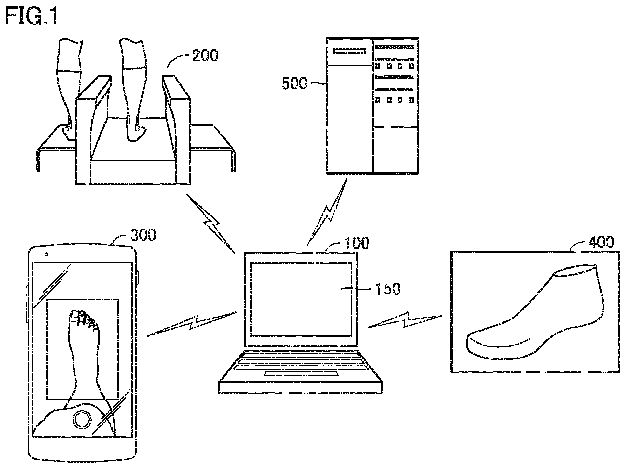

Fig. 1 illustrates an overview of a shoe form manufacturing assistance apparatus 100 according to Embodiment 1. Referring to Fig. 1, the shoe form manufacturing assistance apparatus 100 is installed in a shop. The shoe form manufacturing assistance apparatus 100 is capable of communicating with a measuring apparatus 200, a mobile terminal 300 such as smart phone, and/or a data server 500.

The measuring apparatus 200 is used for measuring the foot form of a user. The measuring apparatus 200 may be provided in the same shop as the shop where the shoe form manufacturing assistance apparatus 100 is provided, or a different shop from the shop where the shoe form manufacturing assistance apparatus 100 is provided. The mobile terminal 300 is used for measuring the foot form of a user in the user's home or a shop that is not equipped with the measuring apparatus 200. The data server 500 is installed in a manufacturer and stores users' personal information, users' shoes purchase histories, shoe form data about existing shoes, and shoe form data generated last time by users, for example.

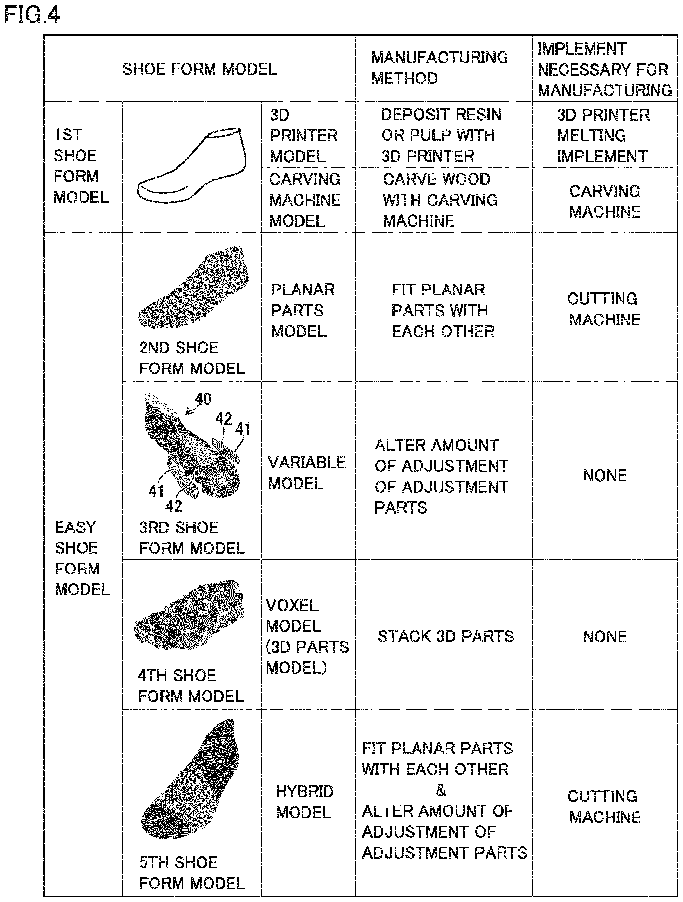

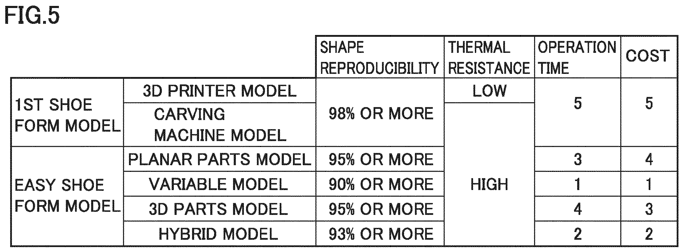

The shoe form manufacturing assistance apparatus 100 receives foot form data for a user from the measuring apparatus 200 or the mobile terminal 300, and selects at least one type of a shoe form model from a plurality of types of shoe form models that are different from each other in terms of manufacturing method, based on the received foot form data for the user. In Embodiment 1, a 3D printer model, a carving machine model, a planar parts model, a variable model, a 3D parts model, and a hybrid model are employed as shoe form models. Details of each shoe form model are described later herein with reference to Figs. 4 and 5.

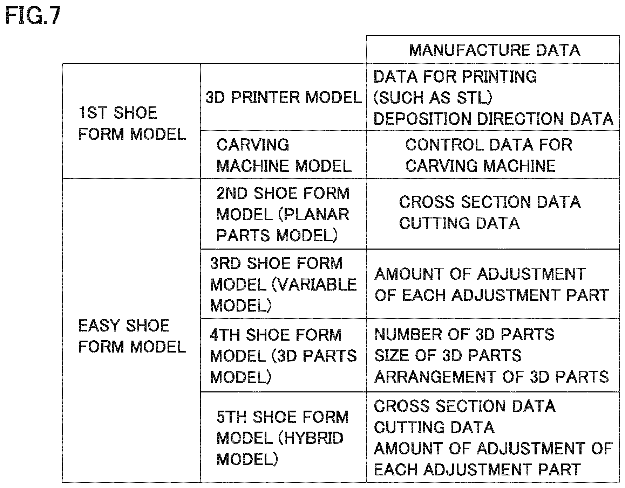

Further, the shoe form manufacturing assistance apparatus 100 calculates manufacture data (described later herein with reference to Fig. 7) necessary for manufacturing a shoe form in accordance with the selected shoe form model, and shows the calculated manufacture data on a display 150.

The shoe form manufacturing assistance apparatus 100 may receive the shoe form data to be used for manufacturing a shoe of the user, and select, based on the received shoe form data, at least one type of a shoe form model from a plurality of types of shoe form models that are different from each other in terms of manufacturing method. In this case, the shoe form manufacturing assistance apparatus 100 acquires, from the data server 500, shoe form data for a shoe purchased in the past by the user or shoe form data generated previously by the user, as shoe form data to be used for manufacturing a shoe of the user.

Moreover, the shoe form manufacturing assistance apparatus 100 may output the manufacture data from a printer, or transmit the manufacture data to a shoe form manufacturing apparatus 400 capable of communicating with the shoe form manufacturing assistance apparatus 100.

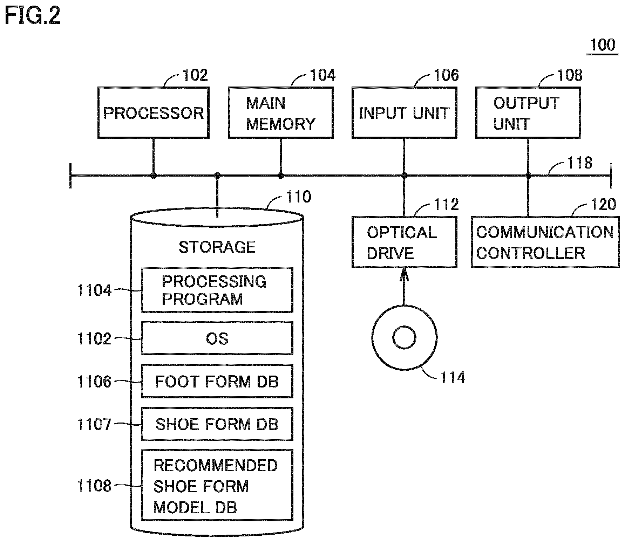

Fig. 2 is a schematic diagram showing an example hardware configuration of the shoe form manufacturing assistance apparatus 100 according to Embodiment 1. Referring to Fig. 2, the shoe form manufacturing assistance apparatus 100 includes a processor 102, a main memory 104, an input unit 106, an output unit 108, a storage 110, an optical drive 112, and a communication controller 120. These components are connected through a processor bus 118.

The processor 102 is configured as a CPU (Central Processing Unit) or GPU (Graphics Processing Unit) for example, and capable of reading a program (an OS (Operating System) 1102 and a processing program 1104, for example) stored in the storage 110, and deploying and executing the program in the main memory 104. The processor 102 executes the processing program 1104 to select a shoe form model from the foot form data and the shoe form data received by the input unit 106, based on a predetermined algorithm, and calculate manufacture data for a shoe model in accordance with the selected shoe form model. The processor 102 which executes the processing program 1104 corresponds to a calculation unit of the shoe form manufacturing assistance apparatus 100.

The main memory 104 is configured as a volatile memory device such as DRAM (Dynamic Random Access Memory) or SRAM (Static Random Access Memory). The storage 110 is configured as a nonvolatile memory device such as HDD (Hard Disk Drive) or SSD (Solid State Drive), for example.

The storage 110 stores, in addition to the OS 1102 for implementing basic functions, the processing program 1104 for providing functions of the shoe form manufacturing assistance apparatus 100. Specifically, the processing program 1104 is executed by the processor 102 of the shoe form manufacturing assistance apparatus 100 to select a shoe form model and calculate manufacture data for a shoe form in accordance with the selected shoe form model. Further, the storage 110 stores a foot form database 1106, a shoe form database 1107, and a recommended shoe form model database 1108.

The foot form database 1106 stores data about a standard foot form for each size. As the data about the standard foot form, data about an average foot form is employed. The foot form database 1106 may store the data about the standard foot form not only for each size but also for each gender, for each age, and/or for each intended use.

The shoe form database 1107 stores data about a standard shoe form for each size. As the data about the standard shoe form, data about an average shoe form is employed. The shoe form database 1107 may store the data about the standard shoe form not only for each size but also for each gender, for each age, and/or for each intended use.

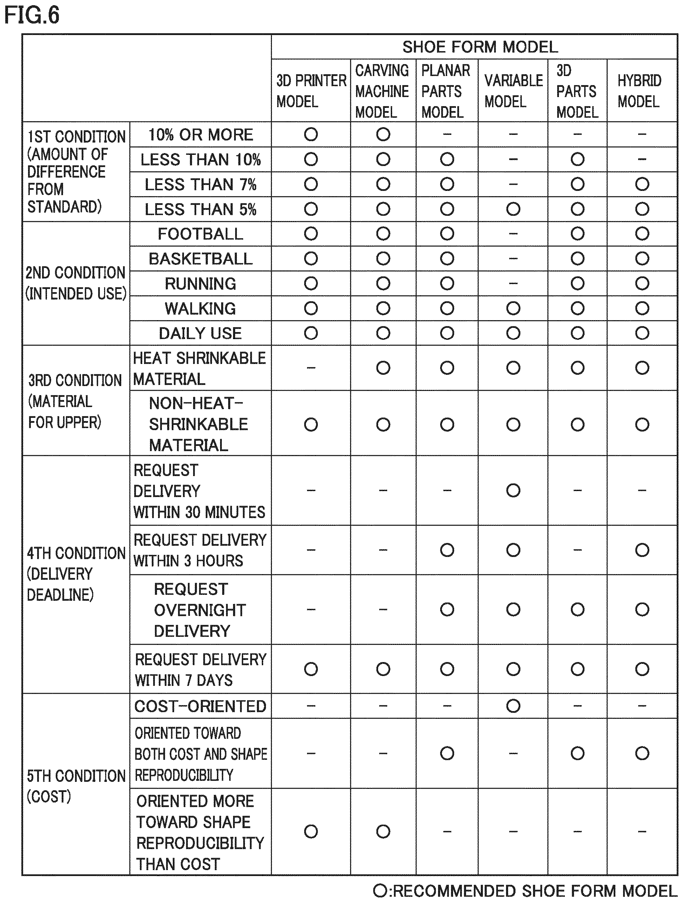

The recommended shoe form model database 1108 stores a recommended shoe form model for each condition. The recommended shoe form model database 1108 is referenced by the processor 102 for selecting a shoe form model. The recommended shoe form model is described later herein with reference to Fig. 6.

The foot form database 1106 and the shoe form database 1107 may each store only the data that is used frequently, and the other data may be stored in the data server 500. The foot form database 1106 and the shoe form database 1107 may each store only a list, and a plurality of pieces of foot form data and a plurality of pieces of shoe form data may themselves be stored in the data server 500.

The input unit 106 receives information regarding a shoe of a user. The input unit 106 includes an input interface connected to the measuring apparatus 200, the mobile terminal 300, or the data server 500 to receive information from the measuring apparatus 200, the mobile terminal 300, or the data server 500. The input unit 106 also includes a keyboard, a mouse, a microphone, and/or a touch device, for example, for receiving information. The input unit 106 that receives information regarding a shoe of a user corresponds to a receiving unit of the shoe form manufacturing assistance apparatus 100.

The output unit 108 outputs the manufacture data calculated by the processor 102. The output unit 108 is configured as a display, various indicators, or a printer, for example, and outputs results of processing from the processor 102. The output unit 108 may also include an output interface that outputs the manufacture data calculated by the processor 102 to the shoe form manufacturing apparatus.

The communication controller 120 uses wired communication or wireless communication to exchange data with another control device or the like. The shoe form manufacturing assistance apparatus 100 receives foot form data from the measuring apparatus 200 or the mobile terminal 300 through the communication controller 120. The shoe form manufacturing assistance apparatus 100 may also receive shoe form data from the data server 500 through the communication controller 120. The shoe form manufacturing assistance apparatus 100 may also transmit the manufacture data to the shoe form manufacturing apparatus through the communication controller 120. A USB controller connected to the processor bus 118 may be provided separately from the communication controller 120 to exchange data with another control device for example through the USB connection.

The optical drive 112 reads, from a recording medium 114 (optical recording medium such as DVD (Digital Versatile Disc) for example) storing a computer-readable program in a non-transitory manner, the program stored therein, and installs the read program in the storage 110 for example.

The processing program 1104 for example that is executed by the shoe form manufacturing assistance apparatus 100 may be installed through the computer-readable recording medium 114, or may be downloaded from a server device for example on the network and then installed. Moreover, the functions provided by the shoe form manufacturing assistance apparatus 100 according to Embodiment 1 may also be implemented through use of a part of modules provided by the OS.

While Fig. 2 shows an example configuration where the processor 102 executes a program to provide functions required to be provided from the shoe form manufacturing assistance apparatus 100, a part or all of these provided functions may be implemented through use of a dedicated hardware circuit (ASIC (Application Specific Integrated Circuit) or FPGA (Field-Programmable Gate Array) or the like, for example). Moreover, the configuration of the shoe form manufacturing assistance apparatus 100 shown in Fig. 2 is given by way of example, and the shoe form manufacturing assistance apparatus 100 is not limited to this configuration.

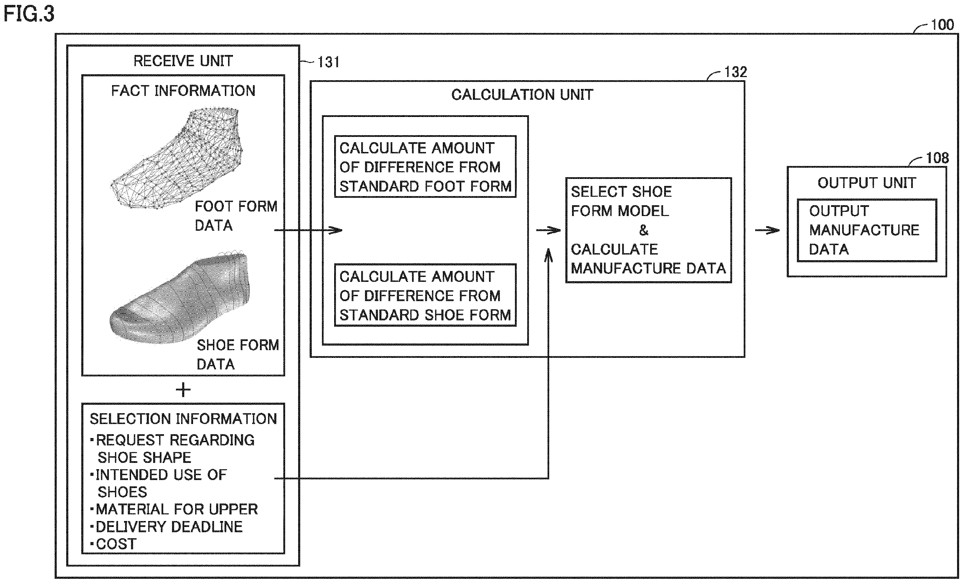

Fig. 3 shows an example functional configuration of the shoe form manufacturing assistance apparatus 100 according to Embodiment 1. The shoe form manufacturing assistance apparatus 100 includes a receiving unit 131, a calculation unit 132, and the output unit 108.

The receiving unit 131 is implemented by the input unit 106 as described above. The receiving unit 131 receives information regarding a shoe of a user. The information regarding the shoe of the user includes fact information and information regarding the shoe that is selected by the user (hereinafter referred to as "selection information").

The fact information is foot form data for the user or shoe form data to be used for manufacturing the shoe of the user. The foot form data for the user is transmitted from the measuring apparatus 200 or the mobile terminal 300. The shoe form data to be used for manufacturing the shoe of the user is transmitted from the data server 500.

The selection information is a request regarding the shape of the shoe, the intended use of the shoe, a request regarding the material for the upper of the shoe, a request regarding the delivery deadline, and/or a request regarding the cost, for example. The request regarding the shape of the shoe is a request regarding the tightness (tighter or looser one is preferred, for example), and/or a request regarding the height of the topline, for example. The intended use of the shoe is daily use, walking, running, or specific sport, for example. The request regarding the material for the upper of the shoe is a request for use of a heat-shrinkable material for the upper, for example. The request regarding the delivery deadline is a request for the number of days within which the shoe should be delivered, for example. The request regarding the cost is a request for a cost at which the shoe should be manufactured.

The selection information is input by a user by means of a keyboard, a mouse, a microphone, and/or a touch device, for example. The selection information shown in Fig. 3 is merely an example, and the selection information is not limited to this. The selection information may include information about shoes currently worn by the user, and/or information about shoes worn in the past by the user, for example. While the information about a shoe of the user received by the receiving unit 131 preferably includes both the fact information and the selection information, the information about a shoe may at least include the fact information and may not include the selection information.

The calculation unit 132 is implemented by the processor 102 as described above. When the fact information received by the receiving unit 131 is data about the foot form of the user, the calculation unit 132 references the foot form database 1106 to extract, as data about a standard foot form, data about a foot form close to the received data about the foot form of the user. The calculation unit 132 compares the data about the foot form of the user with the extracted data about the standard foot form, to calculate the amount of difference between the user's foot form and the standard foot form. The calculation unit 132 references the recommended shoe form model database 1108 to select a shoe form model in accordance with the amount of difference. The calculation unit 132 calculates, based on the data about the user's foot form, manufacture data necessary for manufacturing a shoe form in accordance with the selected shoe form model.

When the fact information received by the receiving unit 131 is data about a shoe form to be used for manufacturing the shoe of the user, the calculation unit 132 references the shoe form database 1107 to extract, as data about a standard shoe form, data about a shoe form close to the received data about the shoe form to be used for manufacturing the shoe of the user. The calculation unit 132 compares the data about the shoe form to be used for manufacturing the shoe of the user with the extracted data about the standard shoe form, to calculate the amount of difference between the shoe form to be used for manufacturing the user's shoe and the standard shoe form. The calculation unit 132 references the recommended shoe form model database 1108 to select a shoe form model in accordance with the amount of difference. The calculation unit 132 calculates, based on the data about the shoe form to be used for manufacturing the user's shoe, manufacture data necessary for manufacturing a shoe form in accordance with the selected shoe form model.

When the receiving unit 131 receives a request regarding the shape of the shoe (selection information) besides the fact information, the calculation unit 132 may correct the calculated amount of difference based on the request to select a shoe form model in accordance with the corrected amount of difference. Specifically, the calculation unit 132 references the recommended shoe form model database 1108 to select a shoe form model in accordance with the corrected amount of difference.

In such a case, the calculation unit 132 outputs the manufacture data based on the data about the user's foot form or the data about the shoe form to be used for manufacturing the user's shoe, as well as the request regarding the shape of the shoe.

When the receiving unit 131 receives, besides the fact information, information about a shoe worn currently by the user (selection information) and/or information about a shoe worn in the past by the user (selection information), the calculation unit 132 may identify a unique characteristic(s) of the user's foot (wide instep, bunion, etc.) based on the above information, and correct the calculated amount of difference based on the identified unique characteristic(s), to select a shoe form model in accordance with the corrected amount of difference.

In such a case, the calculation unit 132 outputs the manufacture data based on the data about the user's foot form or the data about the shoe form to be used for manufacturing the user's shoe, as well as the identified characteristic(s).

When the receiving unit 131 receives, besides the fact information, selection information such as the intended use of the shoe, a request regarding the material for the upper, a request regarding the delivery deadline, and/or a request regarding the cost, the calculation unit 132 may select a shoe form model in accordance with the amount of difference and the selection information. Specifically, the calculation unit 132 references the recommended shoe form model database 1108 to select an appropriate shoe form model in accordance with the amount of difference and the selection information.

In the following, it is supposed that "amount of difference" refers to not only the amount of difference calculated by the calculation unit 132 but also the corrected amount of difference when the amount of difference is corrected. When the recommended shoe form model database 1108 includes a plurality of appropriate types of shoe form models, the calculation unit 132 selects all of these appropriate types of shoe form models.

The output unit 108 outputs the manufacture data calculated by the calculation unit 132. The output unit 108 may output the manufacture data together with the shoe form model selected by the calculation unit 132. When the output unit 108 is configured as a display, the manufacture data is shown on the display. When the output unit 108 is configured as a printer, the manufacture data is output from the printer. When the output unit 108 includes an output interface that provides output to the shoe form manufacturing apparatus, the manufacture data is transmitted to the shoe form manufacturing apparatus. The manufacture data is output, by at least one method, to be shown on the display, to be output from the printer, or to be transmitted to the shoe form manufacturing apparatus.

A plurality of types of shoe form models different from each other in terms of manufacturing method that are used in Embodiment 1 are now described. Fig. 4 shows an example of shoe form models. The shoe form models are classified broadly into first shoe form model and easy shoe form model.

The first shoe form model is a solid-type shoe form model that is a model relatively faithfully reproduces the manufacture data calculated by the calculation unit 132. The first shoe form model includes, for example, a 3D printer model manufactured by depositing resin or pulp with a 3D printer for example, and a carving machine model manufactured by carving a hard material such as wood with a carving machine. In order to manufacture a shoe form of the 3D printer model, an implement for melting resin or pulp is required in some cases, in addition to the 3D printer. In order to manufacture a shoe form of the carving machine model, a carving machine is required.

In contrast, the easy shoe form model is a model that is easier to manufacture than the first shoe form model, and is a model that can also be manufactured in a shop by a clerk of the shop. By way of example, Fig. 4 shows four easy shoe form models (second shoe form model, third shoe form model, fourth shoe form model, and fifth shoe form model).

The second shoe form model is a model that is manufactured from a plurality of planar parts that are assembled together by being fit in engagement grooves formed in each of the planar parts. The planar part is formed by cutting a wooden board such as medium density fiberboard (MDF) with a laser processing machine, for example. The material for the planar part is not limited to MDF but may be another wooden board such as insulation fiberboard (IB) or hard fiberboard (HB). The IB may be a grade A insulation board, a tatami (straw matting) board, or a seizing board used as a material for the planar part. The HB may be a standard board or a tempered board used as a material for the planar part. Further, the material for the planar part is not limited to the wooden boards as described above, but may be any material that can be used for manufacturing a shoe form, such as corrugated cardboard with high recyclability, cork, plywood, particle board, metal, or thermoplastic resin. By way of example, Fig. 4 shows a planar parts model manufactured from a plurality of planar parts of MDF that are assembled together into the model. In order to manufacture a shoe form of the second shoe form model, a cutting machine such as laser processing machine is required.

The third shoe form model is a variable model that is manufactured by altering the amount of adjustment of a plurality of adjustment parts. The third shoe form model is a model that is easiest to manufacture among the shoe form models shown in Fig. 4. By way of example, Fig. 4 shows a variable model 40. As shown in Fig. 4, the variable model 40 is provided with a plurality of adjustment parts 41 and an adjustment mechanism 42 for adjusting the position of each adjustment part 41 so that the position of the adjustment part 41 is variable.

The fourth shoe form model is a model manufactured by stacking together a plurality of 3D parts. By way of example, Fig. 4 shows a voxel model (3D parts model) manufactured by stacking together a plurality of voxels that are box-shaped 3D parts. Another example of the fourth shoe form model may be a model manufactured by stacking together a plurality of spherical beads that are spherical 3D parts, or a model manufactured by staking together a plurality of cylindrical beads that are cylindrical 3D parts.

The fifth shoe form model is a hybrid model into which different shoe form models are combined. By way of example, Fig. 4 shows a model that is manufactured mainly based on the easiest third shoe form model and only a predetermined region of this hybrid model is manufactured based on the second shoe form model.

The predetermined region is a region where the degree of shape conformity of the user's foot form to the standard foot form, or the degree of shape conformity of the shoe form to be used for manufacturing the user's shoe to the standard shoe form is less than a threshold value (the predetermined region is a region corresponding to the instep or a region corresponding to the toe, for example). For the hybrid model shown in Fig. 4, different shoe form models are applied to respective regions, based on the degree of shape conformity of the user's foot form to the standard foot form, or the degree of shape conformity of the shoe form to be used for manufacturing the user's shoe, to the standard shoe form.

Another example of the predetermined region may be a region where the curvature of the foot form of the user or the shoe form to be used for manufacturing the user's shoe is a threshold value or more (a region corresponding to the instep or a region corresponding to the toe, for example).

For the hybrid model shown in Fig. 4, the easiest third shoe form model is applied to the region where the degree of shape conformity is a threshold value or more, and the second shoe form model is applied to the region where the degree of shape conformity is less than the threshold value. This, however, is merely an example. The hybrid model may at least be a model into which different shoe form models are combined. Then, the hybrid model may be a model that is manufactured mainly based on the third shoe form model and only a predetermined region of this hybrid model is manufactured based on the fourth shoe form model, or may be a model that is manufactured mainly based on the first shoe form model and only a predetermined region of this hybrid model is manufactured based on the second shoe form model or the fourth shoe form model. Alternatively, the hybrid model may be a model that is manufactured mainly based on an existing shoe form and only a predetermined region of this hybrid model is manufactured by combining at least one of the first shoe form model, the second shoe form model, the third shoe form model, and the fourth shoe form model.

As shown in Fig. 4, the shoe form models differ from each other in terms of the method and the material for manufacturing each model, and therefore, the shoe form models differ from each other in terms of characteristics. Characteristics of each shoe form model are now described. Fig. 5 shows an example of characteristics of each shoe form model. "Shape reproducibility" shown in Fig. 5 means the degree to which the user's foot shape can be reproduced by the shoe form, "thermal resistance" means the thermal resistance of the shoe form, "operation time" means the time required for manufacturing the shoe form, and "cost" means the cost required for manufacturing the shoe form.

In Fig. 5, "operation time" and "cost" of each shoe form model are evaluated with five grades, a shoe form model that requires a longer time for manufacturing the shoe form is assigned a larger number, and a shoe form model that requires a higher cost for manufacturing the shoe form is assigned a larger number. In the following, characteristics of each shoe form model are described.

The first shoe form model has a characteristic that it has a high shape reproducibility relative to the easy shoe form model. Meanwhile, the first shoe form model tends to require a longer time and a higher cost for manufacturing the shoe form, relative to the easy shoe form model.

The easy shoe form model has a characteristic that it can reduce the time and the cost required for manufacturing the shoe form, relative to the first shoe form model.

The variable model has a characteristic that it requires the shortest time for manufacturing the shoe form and requires the lowest cost for manufacturing the shoe form, among the shoe form models shown in Fig. 5.

The planar parts model, the 3D parts model, and the hybrid model are intermediate among the shoe form models shown in Fig. 5, in terms of the shape reproducibility, the time required for manufacturing a shoe form, and the cost required for manufacturing a shoe form.

The planar parts model has a characteristic that it can require a higher cost for manufacturing the shoe form, relative to the 3D parts model and the hybrid model. The 3D parts model has a characteristic that it can require a longer time for manufacturing the shoe form, relative to the planar parts model and the hybrid model. The hybrid model can reduce the time and the cost required for manufacturing the shoe form, relative to the planar parts model and the 3D parts model.

Regarding other characteristics, the 3D printer model has a characteristic that it can have a lower thermal resistance depending on the material used for the model, relative to the other shoe form models. The numerical values shown in Fig. 5 are given by way of example only. The characteristics shown in Fig. 5 are also given by way of example only, and the characteristics of each shoe form model are not limited to those shown in Fig. 5. The shoe form manufacturing assistance apparatus 100 stores the recommended shoe form model database 1108 that is prepared based on characteristics of each shoe form model, and the calculation unit 132 (see Fig. 3) references the recommended shoe form model database 1108 to select a shoe form model.

Fig. 6 shows an example of the recommended shoe form model database 1108 according to Embodiment 1. As shown in Fig. 6, in the recommended shoe form model database 1108, each condition is associated with a shoe form model(s) recommended under this condition (model(s) with an open circle mark in Fig. 6). The recommended shoe form model database 1108 is referenced by the calculation unit 132 (see Fig. 3) for selecting a shoe form model.

As shown in Fig. 6, "amount of difference from standard" means the amount of difference between the user's foot form and a standard foot form, or the amount of difference between a shoe form used for manufacturing the user's shoe and a standard shoe form, "delivery deadline" means the number of days for which the user can wait for delivery of the shoe, and "cost" means the cost required for manufacturing the shoe.

The calculation unit 132 is configured to identify a relevant condition based on the information (only the fact information, or the fact information and the selection information) regarding the user's shoe received by the receiving unit 131 (see Fig. 3), and select a shoe form model associated with the identified condition.

A recommended shoe form model depending on "amount of difference from standard" is determined based on the shape reproducibility of each shoe form model, and a larger amount of difference from the standard is associated with shoe form models with a higher shape reproducibility. Thus, for a larger amount of difference from the standard, a shoe form model with a higher shape reproducibility is selected.

A recommended shoe form model depending on "intended use" is determined based on the shape reproducibility of each shoe form model, and an intended use in which forward/backward or leftward/rightward movement is made at a relatively high frequency (such as football, basketball, running, for example) is associated with shoe form models with a relatively high shape reproducibility. Thus, for a shoe for an intended use where forward/backward or leftward/rightward movement is made at a relatively high frequency, a shoe form model with a relatively high shape reproducibility is selected.

A recommended shoe form model depending on "upper material" is determined based on the thermal resistance of each shoe form model. An upper made of a heat shrinkable material is associated with shoe form models with a high thermal resistance. Thus, when it is desired to use a heat shrinkable material for the upper, a shoe form model having a high thermal resistance is selected.

A recommended shoe form model depending on "delivery deadline" is determined based on the time required for manufacturing each shoe form model, and a shorter delivery deadline is associated with a shoe form model that requires a shorter time for manufacturing a shoe form. Thus, when earlier delivery of the shoe is desired, for example, a shoe form model that requires a shorter time for manufacturing the shoe is selected.

A recommended shoe form model depending on "cost" is determined based on the cost required for manufacturing each shoe form model and the shape reproducibility of each shoe form model. A request oriented toward the cost is associated with a shoe form model that requires a low cost for manufacturing a shoe form, and a request oriented more toward the shape reproducibility than the cost is associated with a shoe form model with a high shape reproducibility. Thus, when the request is oriented toward the cost, a shoe form model that requires a low cost for manufacturing a shoe form is selected and, when the request is oriented more toward the shape reproducibility than the cost, a shoe form model with a high shape reproducibility is selected.

When the shoe form model selected by the calculation unit 132 based on the information about the user's shoe that is received by the receiving unit 131 is the hybrid model, the calculation unit 132 further determines a combination of shoe form models and a region to which a shoe form model of the hybrid model is to be applied. In one example of the method for determining a shoe form model to be applied to the region, the calculation unit 132 calculates the degree of shape conformity of the user's foot form to the standard foot form, or the degree of shape conformity of the shoe form to be used for manufacturing the user's shoe to the standard shoe form, and determines the shoe form model to be applied, based on the degree of conformity. For a region where the degree of conformity is a threshold value or more, the calculation unit 132 determines that an easy shoe form model such as the variable model should be applied to the region and, for a region where the degree of conformity is less than the threshold value, the calculation unit 132 determines that a shoe form model with a high shape reproducibility should be applied to the region.

In another example, the calculation unit 132 calculates the curvature of the foot form of the user or the curvature of the shoe form to be used for manufacturing the user's shoe, and determines a shoe form model to be applied, based on the curvature. For a region where the curvature is less than a threshold value, the calculation unit 132 determines that an easy shoe form model such as the variable model should be applied to the region and, for a region where the curvature is the threshold value or more, the calculation unit 132 determines that a shoe form model with a high shape reproducibility should be applied to the region.

The conditions shown in Fig. 6 and the recommended shoe form models under these conditions are given merely by way of example, and they are not limited to those shown in Fig. 6. The name and the numerical value for each condition shown in Fig. 6, as well as application of each shoe form model are also given by way of example, and they are not limited to those shown in Fig. 6. The recommended shoe form model database 1108 may at least include a recommended shoe form model(s) depending on "amount of difference from standard" and may or may not include recommended shoe form models depending on other conditions.

The recommended shoe form model database 1108 may also include, other than the recommended shoe form models depending on the conditions shown in Fig. 6, a recommended shoe form model depending on the method for manufacturing the shoe. In an example of such a case, the recommended shoe form model database 1108 may be configured in such a manner that a shoe form model with a high strength is selected when a shoe is manufactured by a method that requires a process of crimping the sole and the upper.

Fig. 7 shows an example of the manufacture data that is output from the shoe form manufacturing assistance apparatus 100 according to Embodiment 1. The calculation unit 132 (see Fig. 3) calculates, after selecting a shoe form model, manufacture data in accordance with the selected shoe form model, and outputs the manufacture data.

When the shoe form model selected by the calculation unit 132 is the 3D printer model, the calculation unit 132 calculates and outputs control data for a 3D printer, i.e., data for printing such as STL (Standard Triangulated Language) data, and deposition direction data.

When the shoe form model selected by the calculation unit 132 is the carving machine model, the calculation unit 132 calculates and outputs control data for a carving machine.

When the shoe form model selected by the calculation unit 132 is the second shoe form model, the calculation unit 132 calculates and outputs shoe form cross section data and cutting data for forming planar parts corresponding to each cross section.

When the shoe form model selected by the calculation unit 132 is the third shoe form model, the calculation unit 132 calculates and outputs the amount of adjustment for each adjustment part.

When the shoe form model selected by the calculation unit 132 is the fourth shoe form model, the calculation unit 132 calculates and outputs the number of 3D parts, the size of the 3D parts, and arrangement (layout) of the 3D parts. The calculation unit 132 may determine the size of the 3D parts to be used, depending on the shape reproducibility requested by the user.

When the shoe form model selected by the calculation unit 132 is the fifth shoe form model, the calculation unit 132 calculates and outputs manufacture data necessary for manufacturing the shoe form of each of the combined shoe form models. By way of example, when the selected shoe form model is a model that is a combination of the second shoe form model and the third shoe form model, the calculation unit 132 calculates and outputs cross section data, cutting data, and the amount of adjustment for each adjustment part.

When the shoe form model selected by the calculation unit 132 is the second shoe form model and the shoe is manufactured by a method that requires a process of crimping the sole and the upper, the calculation unit 132 may make a correction for increasing the number of planar parts, for example, when calculating the manufacture data. Accordingly, the strength of the shoe form can be increased.

When the shoe form model selected by the calculation unit 132 is the fourth shoe form model and the shoe is manufactured by a method that requires a process of crimping the sole and the upper, the calculation unit 132 may make a correction for increasing the number of planar parts, for example, when calculating the manufacture data. Accordingly, the strength of the shoe form can be increased.

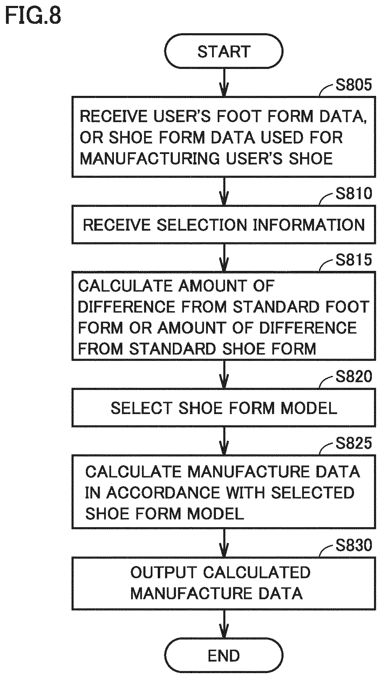

Fig. 8 is a flowchart showing an example of process steps performed by the shoe form manufacturing assistance apparatus 100 according to Embodiment 1. The series of steps shown in Fig. 8 are performed by the processor 102 (see Fig. 2).

In step S805, the processor 102 receives data about a foot form of a user, or data about a shoe form to be used for manufacturing a shoe of the user that is received by the input unit 106 (see Fig. 2).

In step S810, the processor 102 receives selection information received by the input unit 106. When the selection information has not been received by the input unit 106, the processor 102 skips step S810 and proceeds to step S815.

In step S815, when the data about the foot form of the user is received in step S805, the processor 102 compares the data about the foot form of the user with data about a standard foot form, to calculate the amount of difference between the foot form of the user and the standard foot form. When the data about a shoe form used for manufacturing the shoe of the user is received in step S805, the processor 102 compares the data about the shoe form to be used for manufacturing the shoe of the user with data about a standard shoe form, to calculate the amount of difference between the shoe form to be used for manufacturing the user's shoe and the standard shoe form.

In step S820, the processor 102 selects at least one type of a shoe form model in accordance with the amount of difference calculated in step S815. When the selection information is received in step S810, the processor 102 selects at least one type of a shoe form model in accordance with the amount of difference calculated in step S815 and the selection information received in step S810.

In step S825, the processor 102 calculates manufacture data in accordance with the shoe form model selected in step S820.

In step S830, the processor 102 outputs the manufacture data calculated in step S825. Accordingly, the manufacture data is shown on a display of the shoe form manufacturing assistance apparatus 100. The manufacture data may be output from a printer or transmitted to a shoe form manufacturing apparatus. In step S830, the processor 102 may output the shoe form model selected in S820, together with the manufacture data calculated in step S825.

After step S830, the processor 102 ends the series of steps shown in Fig. 8.

When the processor 102 selects a plurality of types of shoe form models in step S820, the processor 102 may output all the selected shoe form models as recommended shoe form models, cause an operator or user to select a shoe form model, and calculate the manufacture data for only the shoe form model selected by the operator or user.

In the series of steps shown in Fig. 8, the processor 102 selects a shoe form model in step S820 and thereafter calculates and outputs the manufacture data. Alternatively, the processor 102 may only select a shoe form model and output the selected shoe form model. Specifically, the shoe form manufacturing assistance apparatus 100 may have only the function of presenting a recommended shoe form model(s), such as the function of selecting, based on information about a shoe of the user, a shoe form model satisfying a condition(s) from a plurality of shoe form models, to output the selected shoe form model.

Thus, the shoe form manufacturing assistance apparatus 100 according to Embodiment 1 selects at least one type of a shoe form model from a plurality of types of shoe form models that are different from each other in terms of manufacturing method, based on received data about the foot form of a user, or received data about a shoe form to be used for manufacturing a shoe of the user.

The shoe form manufacturing assistance apparatus 100 according to Embodiment 1 can receive the selection information, in addition to the data about the user's foot form or the data about the shoe form to be used for manufacturing the user's shoe, and select at least one type of a shoe form model from a plurality of types of shoe form models that are different from each other in terms of manufacturing method, based on the received data about the user's foot form or the received data about the shoe form to be used for manufacturing the user's shoe, and also based on the selection information.

Therefore, the shoe form manufacturing assistance apparatus 100 according to Embodiment 1 selects the optimum shoe form model satisfying the condition(s) from a plurality of shoe form models, to thereby reduce the labor of an operator who manufactures the shoe form.

Moreover, the shoe form manufacturing assistance apparatus 100 according to Embodiment 1 calculates and outputs manufacture data in accordance with the selected shoe form model. Conventionally, the manufacture data has to be calculated with a different piece of software or a different device for each shoe form model. In contrast, the shoe form manufacturing assistance apparatus 100 according to Embodiment 1 calculates and outputs manufacture data in accordance with the selected shoe form model, to thereby reduce the labor of an operator.

### [Embodiment 2]

In connection with Embodiment 2, a description is given of a shoe form manufacturing system that includes the above-described shoe form manufacturing assistance apparatus 100 and the shoe form manufacturing apparatus that manufactures a shoe form using the manufacture data calculated by the shoe form manufacturing assistance apparatus 100. In the following, only the differences from Embodiment 1 are described.

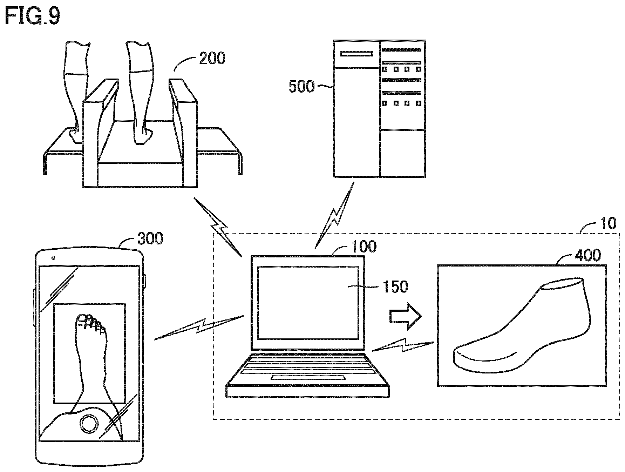

Fig. 9 is a schematic diagram showing an example configuration of a shoe form manufacturing system 10 according to Embodiment 2. The shoe form manufacturing system 10 includes the shoe form manufacturing assistance apparatus 100 and the shoe form manufacturing apparatus 400 in Embodiment 1. The shoe form manufacturing apparatus 400 manufactures a shoe form based on the manufacture data received from the shoe form manufacturing assistance apparatus 100. The shoe form manufacturing system 10 may be installed in one shop or installed across the shop and a manufacturer.

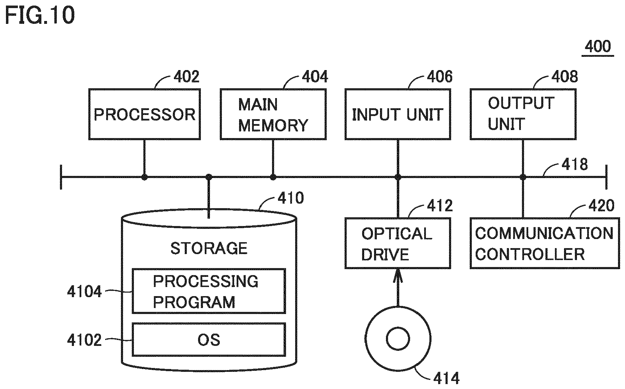

Fig. 10 is a schematic diagram showing an example hardware configuration of the shoe form manufacturing apparatus 400 according to Embodiment 2. Referring to Fig. 10, the shoe form manufacturing apparatus 400 includes a processor 402, a main memory 404, an input unit 406, an output unit 408, a storage 410, an optical drive 412, and a communication controller 420. These components are connected through a processor bus 418.

The processor 402 is configured as a CPU or GPU for example, and capable of reading a program (an OS 4102 and a processing program 4104, for example) stored in the storage 410, and deploying and executing the program in the main memory 404. The processor 402 executes the processing program 4104 for manufacturing a shoe form using manufacture data received by the input unit 406. The processor 402 which executes the processing program 4104 corresponds to a manufacturing unit of the shoe form manufacturing apparatus 400.

The main memory 404 is configured as a volatile memory device such as DRAM or SRAM The storage 410 is configured as a nonvolatile memory device such as HDD or SSD, for example.

The storage 410 stores, in addition to the OS 4102 for implementing basic functions, the processing program 4104 for providing functions of the shoe form manufacturing apparatus 400. Specifically, the processing program 4104 is executed by the processor 402 of the shoe form manufacturing apparatus 400 to manufacture a shoe form.

The input unit 406 includes an input interface connected to the shoe form manufacturing assistance apparatus 100 to receive manufacture data from the shoe form manufacturing assistance apparatus 100. The input unit 406 also includes a keyboard, a mouse, a microphone, and/or a touch device, for example, for receiving information. The input unit 406 corresponds to a receiving unit of the shoe form manufacturing apparatus 400.

The output unit 408 is configured as a display, for example, and outputs results of processing from the processor 402, for example.

The communication controller 420 uses wired communication or wireless communication to exchange data with another control device, for example. The shoe form manufacturing apparatus 400 receives the manufacture data from the shoe form manufacturing assistance apparatus 100 through the communication controller 420.

The optical drive 412 reads, from a recording medium 414 (optical recording medium such as DVD for example) storing a computer-readable program in a non-transitory manner, the program stored therein, and installs the read program in the storage 410 for example.

The processing program 4104 for example that is executed by the shoe form manufacturing apparatus 400 may be installed through the computer-readable recording medium 414, or may be downloaded from a server device for example on the network and then installed. Moreover, the functions provided by the shoe form manufacturing apparatus 400 according to Embodiment 2 may also be implemented through use of a part of modules provided by the OS.

While Fig. 10 shows an example configuration where the processor 402 executes a program to provide functions required to be provided from the shoe form manufacturing apparatus 400, a part or all of these provided functions may be implemented through use of a dedicated hardware circuit (ASIC or FPGA or the like, for example). Moreover, the configuration of the shoe form manufacturing apparatus 400 shown in Fig. 10 is given by way of example, and the shoe form manufacturing apparatus 400 is not limited to this configuration.

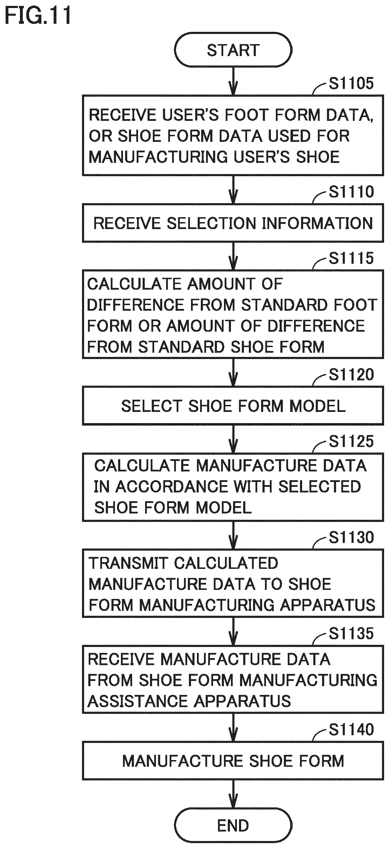

Fig. 11 is a flowchart showing an example of a process performed by the shoe form manufacturing system 10 according to Embodiment 2. In the process shown in Fig. 11, steps S1105 to S1130 are performed by the processor 102 (see Fig. 2) of the shoe form manufacturing assistance apparatus 100, and steps S1135 and S1140 are performed by the processor 402 (see Fig. 10) of the shoe form manufacturing apparatus 400.

In steps S1105 to S1125, the processor 102 performs operations similar to those in steps S805 to S825.

In step S1130, the processor 102 transmits, to the shoe form manufacturing apparatus 400, the manufacture data calculated in step S1125.

In step S1135, the processor 402 receives the manufacture data from the shoe form manufacturing assistance apparatus 100.

In step S1140, the processor 402 manufactures a shoe form using the manufacture data received from the shoe form manufacturing assistance apparatus 100.

After step S1140, the shoe form manufacturing system 10 ends the series of steps shown in Fig. 11.

Thus, the shoe form manufacturing system 10 according to Embodiment 2 selects at least one type of a shoe form model from a plurality of types of shoe form models that are different from each other in terms of manufacturing method, based on the received data about the user's foot form or the received data about the shoe form to be used for manufacturing the user's shoe, calculates manufacture data in accordance with the selected shoe form model, and manufactures the shoe form using the calculated manufacture data.

The shoe form manufacturing system 10 according to Embodiment 2 can receive the selection information, in addition to the foot form data for the user or the shoe form data to be used for manufacturing the user's shoe, select at least one type of a shoe form model from a plurality of types of shoe form models that are different from each other in terms of manufacturing method, based on the received foot form data for the user or the received shoe form data to be used for manufacturing the user's shoe, and also based on the selection information, calculate the manufacture data in accordance with the selected shoe form model, and manufacture a shoe form using the calculated manufacture data..

Therefore, the shoe form manufacturing system 10 according to Embodiment 2 selects the optimum shoe form model satisfying the condition(s) from a plurality of shoe form models, to thereby reduce the labor of an operator who manufactures the shoe form.

Conventionally, the manufacture data has to be calculated with a different piece of software or a different device for each shoe form model, to manufacture a shoe form using the calculated manufacture data. In contrast, the shoe form manufacturing system 10 according to Embodiment 2 calculates the manufacture data in accordance with the selected shoe form model, and manufactures a shoe form using the manufacture data, to thereby reduce the labor of an operator.

### [Other Modifications]

While the shoe form manufacturing assistance apparatus 100 may be installed for each shop, it may be installed only in a specific shop such as a large-scale shop and the data about the user's foot form may be received from the measuring apparatus 200 in a different shop. The shoe form manufacturing assistance apparatus 100 may alternatively be installed in a manufacturer.

The shoe form manufacturing assistance apparatus 100 may store, through a network in the data server 500, the received shoe form data together with user's personal information.

The shoe form manufacturing assistance apparatus 100 may also store, through a network in the data server 500, the selected type of the shoe form model and the calculated manufacture data, together with user's personal information.

The data server 500 is not limited to the one installed in the manufacturer, but may be installed in another place, such as a specific shop. The data server 500 may be implemented in the form of a cloud service.

The receiving unit 131 may receive, as the selection information, a design pattern that the user prefers. In such a case, for example, a user interface may be provided that allows the user to select a design pattern that the user prefers, from a plurality of design patterns prepared in advance.

Moreover, in order to make the work for manufacturing a shoe form speedier, an assembly robot or the like may be prepared other than the implements shown in Fig. 4.

Although the present invention has been described and illustrated in detail, it is clearly understood that the same is by way of illustration and example only and is not to be taken by way of limitation, the scope of the present invention being interpreted by the terms of the appended claims.

## Claims

1. A shoe form manufacturing assistance apparatus (100) comprising:
a receiving unit (131) that receives information about a shoe of a user;
a calculation unit (132) that selects, based on the information received by the receiving unit, at least one type of a shoe form model from a plurality of types of shoe form models that are different from each other in terms of manufacturing method, and calculates manufacture data for a shoe form in accordance with the at least one type of the shoe form model that is selected; and
an output unit (108) that outputs the manufacture data calculated by the calculation unit.

2. The shoe form manufacturing assistance apparatus according to claim 1, wherein
the plurality of types of shoe form models include:
a first shoe form model for manufacturing a shoe form using a 3D printer or a carving machine; and
at least one of easy shoe form models that are easier to manufacture than the first shoe form model.

3. The shoe form manufacturing assistance apparatus according to claim 2, wherein
the at least one of easy shoe form models includes:
a second shoe form model for manufacturing a shoe form from a plurality of planar parts that are fit with each other;
a third shoe form model for manufacturing a shoe form by altering an amount of adjustment of a plurality of adjustment parts; and
a fourth shoe form model for manufacturing a shoe form by stacking together a plurality of 3D parts.

4. The shoe form manufacturing assistance apparatus according to claim 3, wherein
for the first shoe form model, the manufacture data is control data for the 3D printer or the carving machine,
for the second shoe form model, the manufacture data is cutting data for the plurality of planar parts,
for the third shoe form model, the manufacture data is adjustment amount data for each of the adjustment parts, and
for the fourth shoe form model, the manufacture data is layout data for the plurality of 3D parts.

5. The shoe form manufacturing assistance apparatus according to any one of claims 1 to 4, wherein
the information about the shoe of the user received by the receiving unit includes fact information, and
the fact information includes data about a foot form of the user, or data about a shoe form to be used for manufacturing the shoe of the user.

6. The shoe form manufacturing assistance apparatus according to claim 5, wherein
the calculation unit
compares data about a standard foot form with the data about the foot form of the user received by the receiving unit, to calculate an amount of difference between the standard foot form and the foot form of the user, or compares data about a standard shoe form with the data about the shoe form to be used for manufacturing the shoe of the user, to calculate an amount of difference between the standard shoe form and the shoe form to be used for manufacturing the shoe of the user, and
selects the shoe form model in accordance with the calculated amount of difference.

7. The shoe form manufacturing assistance apparatus according to any one of claims 1 to 6, wherein the information about the shoe of the user received by the receiving unit further includes selection information selected by the user.

8. The shoe form manufacturing assistance apparatus according to claim 7, wherein
the selection information includes at least one of information about an intended use of the shoe, and information about a material for an upper of the shoe, and
the calculation unit selects the shoe form model in accordance with at least one of the information about the intended use of the shoe and the information about the material for the upper of the shoe received by the receiving unit.

9. The shoe form manufacturing assistance apparatus according to claim 7 or 8, wherein
the selection information includes at least one of information about a delivery deadline and information about a cost, and
the calculation unit selects the shoe form model in accordance with at least one of the information about the delivery deadline and the information about the cost received by the receiving unit.

10. A shoe form manufacturing system (10) comprising:
the shoe form manufacturing assistance apparatus (100) according to any one of claims 1 to 9; and
a shoe form manufacturing apparatus (400) that manufactures a shoe form using the manufacture data calculated by the shoe form manufacturing assistance apparatus.
